# EUROPÄISCHE PATENTSCHRIFT

(11) **EP 0 827 119 B1**
(45) Veröffentlichungstag und Bekanntmachung des Hinweises auf die Patenterteilung: **06.09.2000**
(21) Anmeldenummer: 96810570.0
(22) Anmeldetag: 29.08.1996
(51) Int. Cl.: G07F 7/08, H04M 17/00

(54) **Verfahren zum Aufladen oder Nachladen einer Datenträgerkarte mit einem Geldbetragswert**
Method for charging or recharging a data carrying card with a monetary value
Méthode pour charger ou recharger une carte support de données avec une valeur monétaire

(43) Veröffentlichungstag der Anmeldung: 04.03.1998
(73) Patentinhaber: Swisscom AG, 3050 Bern (CH)
(72) Erfinder: Aebi, Paul, 3303 Münchringen (CH); De Bruin, Ronald, 3047 Bremgarten (CH); Martschitsch, Andreas, 3360 Herzogenbuchsee (CH); Ritter, Rudolf, 3052 Zollikofen (CH)
(74) Vertreter: BOVARD AG - Patentanwälte

(56) Entgegenhaltungen:
- EP-A- 0 420 466
- EP-A- 0 572 991
- EP-A- 0 589 757
- EP-A- 0 623 903
- EP-A- 0 698 987
- WO-A-95/35619
- GB-A- 2 215 897
- US-A- 5 359 182

## Beschreibung

Die vorliegende Erfindung bezieht sich auf Verfahren zum Aufladen oder Nachladen einer Datenträgerkarte mit einem Geldbetragswert, insbesondere einer SIM-Karte für ein Kommunikationsgerät, welches einem Kommunikationsnetz zugeordnet ist, welche Datenträgerkarte mit einem Speichermittel ausgerüstet ist, in welchem Speichermittel der Geldbetrag gespeichert ist. Im weiteren bezieht sich die Erfindung auf eine Anlage zum Durchführen der Verfahren.

SIM-Karten (SIM, Subscriber Identification Module) werden heute üblicherweise in Mobilfunktelefonen in einem Natel-D-Netz gemäss dem GSM-Standard (GSM, Global System for Mobil Communication) eingesetzt. Die SIM-Karten dienen unter anderem zur Identifikation eines Teilnehmers und zur teilnehmergebundenen Abrechnung der vom betreffenden Teilnehmer über das Mobilfunknetz geführten Telefongespräche. Die Kosten werden beim Mobilfunk gemäss dem GSM-Standard im Gegensatz zu drahtgebundenen Telefonapparaten nicht mehr einem fest installierten Apparat zugeordnet, sondern direkt dem Besitzer der entsprechenden SIM-Karte.

In der europäischen Patentanmeldung EP 0 689 368 ist eine Vorrichtung zur Übermittlung von Meldungen in einem mobilen Kommunikationsnetz offenbart, gemäss welcher die Anwendung der SIM-Karten, insbesondere zur Übermittlung von Kurzmeldungen, zum Verarbeiten von besonderen Diensten nach einer speziellen Prozedur, die nur bestimmten, dazu autorisierten Teilnehmern zugänglich ist, erweitert worden ist. In dieser Vorrichtung bietet sich die Möglichkeit, nicht nur beliebige Bitströme im transparenten Modus nach dem GSM-Phase-2-Standard als Kurzmeldung von einer Zentrale auf die SIM-Karte zu übertragen, sondern Daten und ausführbare Instruktionen an dazu autorisierte Teilnehmer zu senden oder von diesen zu empfangen. Dies, ohne dass international festgelegte Standards geändert werden müssen.

Die vorliegende Erfindung beschreibt nun einen bestimmten besonderen Dienst, bzw. eine bestimmte Funktion, nämlich ein Verfahren zum Aufladen oder Nachladen einer Datenträgerkarte, insbesondere einer SIM-Karte mit einem Geldbetragswert, die zusammen mit der in der obengenannten europäischen Patentanmeldung offenbarten Vorrichtung zur Anwendung gelangt. Obschon dies zum heutigen Zeitpunkt nicht vorgesehen ist, ist es denkbar, auch drahtgebundene Kommunikationsgeräte mit SIM-Karten zu betreiben und die Abrechnung nicht mehr gerätegebunden, sondern kartengebunden durchzuführen.

Auf der SIM-Karte ist ein Elektronikchip vorhanden, welcher über ein Kontaktfeld, das aus mehreren einzelnen elektrischen Kontakten besteht, mit einer im Kommunikationsgerät angeordneten Schreib/Lese-Vorrichtung elektrisch verbindbar ist. Der Chip umfasst unter anderem ein Speichermittel, in welchem ein Geldbetragswert gespeichert ist. Bei Telefongesprächen oder bei der Ausführung anderer Dienste wird der gespeicherte Geldbetragswert nach und nach abgebucht und muss, wenn er Null ist oder ein Minimum erreicht hat, vom Karteninhaber wieder aufgeladen werden. Dieser Vorgang ist bis jetzt relativ kompliziert. Es ist nämlich vorgesehen, dass der Karteninhaber auf einer Poststelle eine Einzahlung mit einem bestimmten Geldbetrag macht, welcher Geldbetrag dann von der Post einem elektronischen Abrechnungsmodul (MOBIA, Customer Care and Billing System for Mobilcom) übermittelt wird. Der vom Teilnehmer einbezahlte Geldbetrag wird dann vom Abrechnungsmodul als Geldbetragswert zusammen mit den Identifikationsdaten des Teilnehmers an eine Betriebszentrale für besondere Dienste (SSC, SIM Service Center) übermittelt. Dort wird gemäss einem besonderen Dienst bzw. einer besonderen Funktion eine Kurzmeldung aufbereitet, welche dann beim nächsten Mal, wenn der Teilnehmer zum Telefonieren aktiv wird, den Geldbetragswert mittels einer Kurzmeldung der SIM-Karte übermittelt und dort den abgespeicherten Geldbetragswert um den entsprechenden Betrag nachlädt oder auflädt.

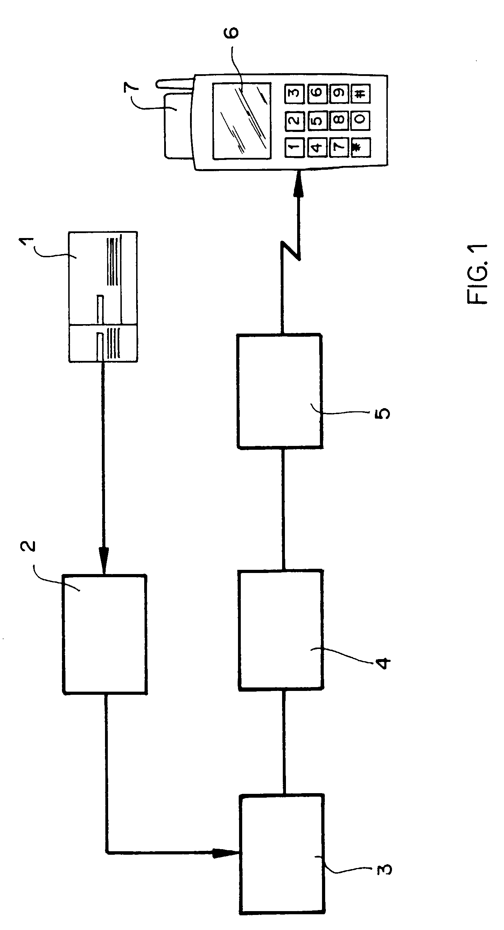

Dieses zum Stand der Technik gehörende Vorgehen ist in der angefügten Fig. 1 blockschaltbildmässig für ein Mobilfunknetz dargestellt. Das Bezugszeichen 1 kennzeichnet dabei einen Posteinzahlungsschein, mit welchem an einer Einzahlstelle, beispielsweise an einer Postdienststelle 2, eine Einzahlung getätigt werden kann. Der entsprechend eingezahlte Geldbetrag wird als Geldbetragswert zusammen mit der Teilnehmeridentifikation dem bereits genannten Abrechnungsmodul 3 weitergeleitet, welches dafür sorgt, dass in einer Betriebszentrale für besondere Dienste 4 eine Kurzmeldung aufbereitet wird. Diese Kurzmeldung 5 wird dann über ein Mobilfunktelefon 6 beim nächsten Mal, wenn der entsprechende Teilnehmer aktiv wird, auf seine in dieses Mobilfunktelefon eingesteckte SIM-Karte 7 übermittelt. Der in der Kurzmeldung enthaltene Geldbetragswert wird auf der SIM-Karte 7 abgespeichert. Diese wird mit dem einbezahlten Geldbetragswert nach- oder aufgeladen.

Dieses Vorgehen, insbesondere zum Ausführen der Zahlung bei einer Postdienststelle, ist relativ aufwendig. Es ist deshalb die Aufgabe der vorliegenden Erfindung, nach einer Lösung zu suchen, mit der das Einbezahlen eines Geldbetragswertes zum Auf- oder Nachladen einer SIM-Karte vereinfacht wird.

Gelöst wird diese Aufgabe mit einem Verfahren, das die im Kennzeichen der Patentansprüche 1 bzw. 5 aufgeführten Verfahrensschritte aufweist. Eine Anlage zum Durchführen des Verfahrens benötigt die im Kennzeichen des Patentanspruches 9 aufgeführten Anlagenteile.

Ein Hauptvorteil des erfindungsgemässen Verfahrens liegt darin, dass die Wertkarte an sehr vielen Verkaufsstellen, wie Ladengeschäfte, Kiosks oder Postdienststellen gekauft werden kann. Dadurch wird das mühselige Vorgehen des Ausfüllens eines Einzahlungsscheines und das Einzahlen eines Betrages an einer Postdienststelle für das Auf- oder Nachladen einer bestimmten Datenträgerkarte, insbesondere einer SIM-Karte eliminiert.

Der Betrag, der für eine Wertkarte zu bezahlen ist, entspricht gleichzeitig dem Betrag, um den eine bestimmte Datenträgerkarte, insbesondere eine SIM-Karte, höchsten nach- oder aufgeladen werden kann.

Die Wertkarte besitzt ein abgedecktes Codefeld, welches einerseits dazu bestimmt ist, anhand seiner vollständigen Abdeckung festzustellen, dass die Wertkarte noch nicht benutzt worden ist. Nach dem Freilegen des abgedeckten Codefeldes, beispielsweise durch Wegkratzen einer abdeckenden Schicht, wird ein Code freigelegt, anhand dessen über jedes beliebige Kommunikationsgerät das mit einem öffentlichen Kommunikationsnetz verbunden ist, das Nach- oder Aufladen einer bestimmten SIM-Karte vorbereitet werden kann. Mittels eines sprachgeführten Menüs wird nach dem Anrufen einer bestimmten Dienstnummer der Besitzer der Wertkarte aufgefordert, den Code in das Kommunikationsgerät einzugeben, beispielsweise einzutippen. Der Teilnehmer ist dabei mit einer Datenbank verbunden, in welcher sämtliche Codes und die zugeordneten Geldbetragswerte, für die jemals Wertkarten erstellt worden sind, abgespeichert sind. Wird der eingetippte Code in der Datenbank gefunden, so wird eine Kurzmeldung nach dem GSM-Phase-2-Standard vorbereitet und in einer Kurzmeldungsservicezentrale abgelegt. In der Datenbank wird dabei der Code mit dem zugeordneten Geldwertbetrag als gebraucht markiert oder gelöscht. Wenn der Teilnehmer die obenerwähnte Dienstnummer mit einem Kommunikationsgerät anruft, in dem seine SIM-Karte steckt, so wird seine persönliche Identifikation, die auf der SIM-Karte gespeichert ist, automatisch erkannt. Nach dem Eingeben des Codes ist bekannt, wem der Geldwertbetrag zuzuordnen ist. In der Kurzmeldung, die vorbereitet und in einer Kurzmeldungsservicezentrale abgespeichert wird, findet sich der Identifikationscode des Teilnehmers und der Geldbetragswert. Wird der Anruf der oben genannten Dienstnummer mit einem Kommunikationsgerät ausgeführt, bei dem keine SIM-Karten verwendet werden können, beispielsweise von einer normalen Telefonstation aus, so wird nach dem Eingeben des Codes der Teilnehmer aufgefordert, ebenfalls den Identifikationscode der SIM-Karte einzugeben, für welche der Geldbetragswert bestimmt ist.

Die Wertkarte kann auch zum normalen Telefonieren benutzt werden. Dabei wird nach dem Anrufen der vorgenannten Dienstnummer in einem Verfahrensschritt der Anrufer mittels automatischer Sprachausgabe gefragt, ob eine Datenträgerkarte auf- oder nachgeladen werden soll, oder ob ein Telefongespräch geführt werden soll. Beim Führen eines Telefongespräches wird nach dem Eingeben der Codenummer ein Gesprächsbetrag anhand des angerufenen Teilnehmers und der Gesprächsdauer berechnet und in der Datenbank festgehalten oder bereits vom dort gespeicherten Geldbetragswert subtrahiert. Es ist naheliegend, dass bei einem nachträglichen Auf- oder Nachladen der Datenträgerkarte in diesem Fall nicht mehr der volle Geldbetragswert auf- oder nachgeladen wird, sondern nur noch um den durch die Summe aller Gesprächsbeträge reduzierten Geldbetragswert.

Wie bereits angetönt, besitzt die Wertkarte einen Bereich mit einem Feld, das einen Code enthält und das beim Kauf der Karte mit einer undurchsichtigen ablösbaren Schicht abgedeckt ist. Die vollständige Abdeckung des Feldes ist eine Garantie dafür, dass die erworbene Wertkarte wirklich neu und noch nie gebraucht worden ist. Eine ähnliche Karte mit einer wegkratzbaren Schicht ist in der europäischen Patentanmeldung mit der Veröffentlichungsnummer EP 0 689 163 A1 bekannt geworden. Dort handelt es sich um eine Datenträgerkarte mit einem Chip, der mehrere elektrische Kontakte zum Verbinden mit einem Kartenleser aufweist. Damit festgestellt werden kann, ob die Datenträgerkarte bereits verwendet worden ist oder nicht, ist zumindest ein Teil der elektrischen Kontakte mit einer wegkratzbaren Schicht abgedeckt. Die Karte dient dazu, Telefongespräche zu führen. Sie weist dazu im Chip eine bestimmte Anzahl Gesprächseinheiten auf, die beim Telefonieren nach und nach abgebucht werden. Die Karte kann auch ein zweites abgedecktes Feld aufweisen, das mit einer wegkratzbaren Schicht abgedeckt ist, in welchem Feld nach dem Wegkratzen beispielsweise eine Losnummer sichtbar wird. Diese vorbekannte Karte ist jedoch nicht dazu vorgesehen, andere Datenträgerkarten mit einem Geldwertbetrag aufzuladen.

Wertkarten, die einen Code umfassen, der an einer Dienstzentrale eingegeben werden muss, um auf bestimmte Telefondienste zugreifen zu können, sind schon aus WO 95/35619 bekannt. Es wird jedoch in diesem Dokument nicht beschrieben, wie auch Datenträgerkarten aufgeladen oder nachgeladen werden können.

EP-A1-0589757 beschreibt ein Verfahren, um vorbezahlte Nachladebeträge durch ein Telekommunikationssystem zu übertragen. Diese Anmeldung beschreibt vor allem die Sicherung der Übertragung.

Bis heute ist vorgesehen, dass das Kommunikationsgerät, das mit der Datenträgerkarte, insbesondere mit der SIM-Karte betrieben werden kann, ein Mobiltelefon mit einem Kartenleser nach dem GSM-Standard ist. Natürlich kann vorgesehen sein, obschon dies heute noch nicht beabsichtigt ist, dass auch drahtgebundene Telefonapparate in Zukunft einen Kartenleser aufweisen können und mit einer dem entsprechenden Teilnehmer oder Anrufer gehörenden SIM-Karte benutzt werden können. Das ganze Abrechnungsverfahren der Telekommunikationsgesellschaft würde dadurch nicht mehr pro angeschlossenes, drahtgebundenes Kommunikationsgerät, wie Telefonapparate, erfolgen, sondern genau gleich pro SIM-Kartenbesitzer.

Wie vorgängig beschrieben, erfolgt die Führung des Teilnehmers durch ein sprachausgebendes System. Dieses System ist als Sprachserver aufgebaut, der im Kommunikationsnetz integriert ist und der mit der vorgenannten Dienstnummer angerufen werden kann. Der Zugang zum Sprachserver kann dabei über ein drahtgebundenes Kommunikationsnetz oder über ein Mobilfunknetz erfolgen. In der Anlage ist ebenfalls ein Abrechnungsmodul vorhanden, welches einerseits mit dem sprachausgebenden System und mit der Datenbank verbunden ist, und andererseits eine Verbindung zur Kurzmeldungsservicezentrale aufweist. Dieses Abrechnungsmodul dient einerseits dazu, Meldungen, die von der Datenbank kommen, und einen Identifikationscode und den Geldbetragswert enthalten, um den die durch den Identifikationscode bestimmte SIM-Karte auf- oder nachzuladen ist, an die Kurzmeldungsservicezentrale weiterzuleiten und dient aber andererseits auch dazu, für gemäss dem Stand der Technik einbezahlte Geldbeträge entsprechende Kurzmeldungen vorzubereiten.

Die vorliegende Erfindung ist nachfolgend anhand von Figuren beispielsweise näher beschrieben. Es zeigen
Fig. 1 ein Blockschaltbild zum Verfahren gemäss dem Stand der Technik,
Fig. 2 ein Blockschaltbild, das erfindungsgemässe Verfahren darstellend,
Fig. 3 ein erstes Flussdiagramm, die Verfahrensschritte des Beginnes des erfindungsgemässen Verfahrens darstellend,
Fig. 4 ein zweites Flussdiagramm, die Verfahrensschritte zum erfindungsgemässen Auf- oder Nachladen einer bestimmten Datenträgerkarte darstellend, und
Fig. 5A und 5B ein drittes Flussdiagramm, die Verfahrensschritte beim Benutzen der erfindungsgemässen Wertkarte zum üblichen Telefonieren darstellend.

In der Fig. ist ein Stand der Technik blockschaltbildmässig wiedergegeben, der bereits in der Beschreibungseinleitung beschrieben worden ist.

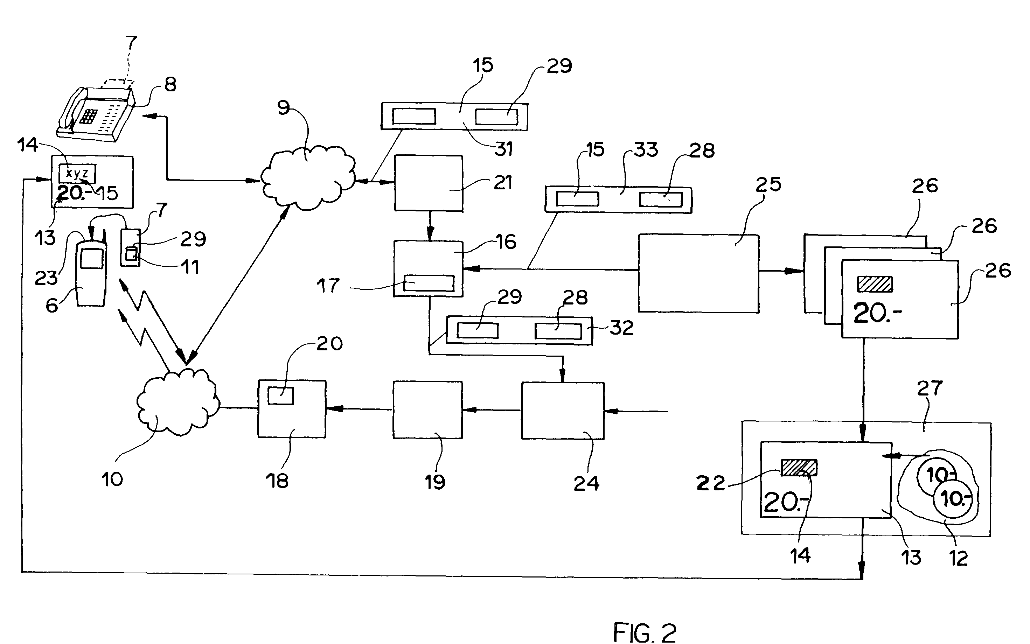

Die Fig. 2 zeigt blockschaltbildmässig Hardwarekomponenten, die zum Durchführen des erfindungsgemässen Verfahrens gebraucht werden.

Das Bezugszeichen 25 kennzeichnet eine Wertkartenherstellstelle, bei der Wertkarten beispielsweise aus Karton oder Plastik hergestellt werden. Auf jede Wertkarte wird dabei ein Geldbetragswert, beispielsweise 10, 20, 50 oder 100 Geldeinheiten aufgedruckt. Jede Wertkarte 26 wird in einem dafür vorgesehenen Bereich auf einem Codefeld 14 mit einem Code 15 versehen. Das Feld 14 bzw. dieser Bereich wird dann mit einer ablösbaren Schicht 22, die undurchsichtig ist, abgedeckt, so dass der Code bei neuen Wertkarten 26 nicht mehr sichtbar ist. Die Oberflächen der Wertkarten können beispielsweise mit einem Werbeaufdruck versehen werden. Auch ist es möglich, eine Gebrauchsanleitung für Wertkarten aufzudrucken. Es wird an dieser Stelle vorausgeschickt, dass bei der Wertkartenherstellung in der Wertkartenherstellstelle 25 für jede hergestellte neue Wertkarte 26 der ihr zugeordnete Code 15 und der ihr zugeordnete Geldbetragswert 28 in einem Meldungsblock 33 einer Bewertungsplattform 16 übermittelt und dort in einer Datenbank 17 abgespeichert werden.

Die neu erstellten Wertkarten 26 gelangen dann zu Verkaufsstellen 27, beispielsweise zu Kiosks, Läden, Postdienststellen, etc. In einem möglichst breit gefächerten Verkaufsnetz können die Wertkarten käuflich erworben werden, indem der auf der Wertkarte aufgedruckte Betrag mit einem entsprechenden Geldbetrag 12 bezahlt. Die Wertkarte 26 wird darum auch vorauszahlbare Wertkarte 13 genannt.

Eine zum Auf- oder Nachladen vorgesehene Datenträgerkarte 7 umfasst in einem Elektronikchip ein Speichermittel 11, in welchem neben einem Identifikationscode 29 unter anderem auch ein Geldbetragswert abgespeichert ist. Der Geldbetragswert muss nicht unbedingt einem Münzwert entsprechen, sondern kann auch in Taxeinheiten aufgeteilt sein. Der Identifikationscode kann beispielsweise für Kommunikationsgeräte, die in einem Mobilfunknetz gebraucht werden, der Natel-D-Nummer entsprechen.

Zum Auf- oder Nachladen der Datenträgerkarte 7 wird diese in einem dafür vorgesehenen Kartenleser 23 in einem Kommunikationsgerät 6, üblicherweise einem Mobilfunktelefon, gesteckt. Die ablösbare Schicht 22 der vorausbezahlten Datenträgerkarte 13 wird nun entfernt. Vorteilhafterweise ist dabei die ablösbare Schicht 22 derart ausgeführt, dass sie lediglich durch Wegkratzen mit dem Fingernagel entfernt werden kann. Der Code 15 im Codefeld 14 wird nun sichtbar.

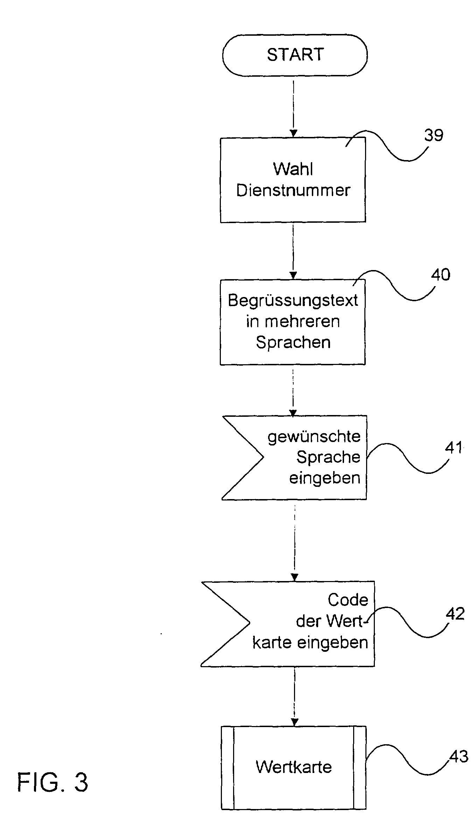

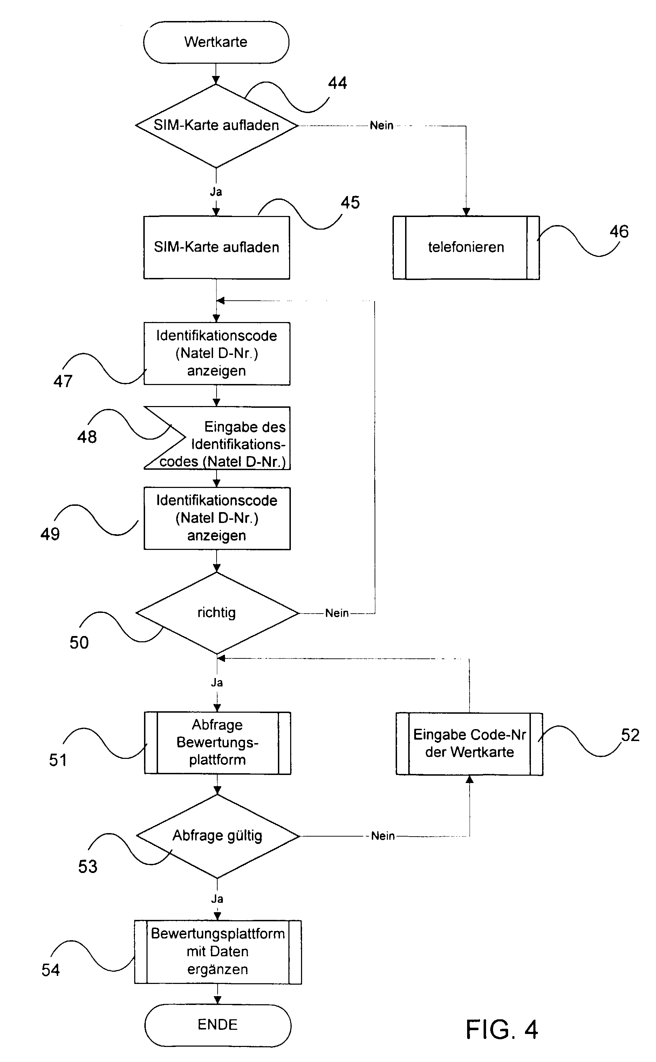

In weiteren Verfahrensschritten zum Auf- oder Nachladen der Datenträgerkarte, die auch in den Flussdiagrammen der Fig. 3 und 4 sichtbar sind, wird nun eine Dienstnummer gewählt. Die Dienstnummer kann auf der Wertkarte aufgedruckt sein. Nach der Wahl der Dienstnummer wird das Mobilfunktelefon im gezeigten Beispiel über das drahtlos arbeitende Kommunikationsnetz 10, das Mobilfunknetz und über das drahtgebunden arbeitende Kommunikationsnetz 9, beispielsweise ISDN, mit dem Sprache ausgebenden System 21, einen Sprachserver 21, verbunden. Dieser Vorgang entspricht dem Block 39 im Flussdiagramm der Fig. 3. Der Teilnehmer wird gemäss dem Block 40 in mehreren Sprachen begrüsst. Gemäss dem Block 41 fordert der Sprachserver den Teilnehmer mit einer gesprochenen Mitteilung nun auf, die für ihn gewünschte Sprache der Menuführung einzugeben. Der Teilnehmer kann dabei je nach Region zwischen mehreren Sprachen, beispielsweise deutsch, französisch, italienisch und englisch wählen.

Nachdem dies geschehen ist, fordert der Sprachserver gemäss dem Block 42 im Flussdiagramm der Fig. 3 den Teilnehmer in der von ihm gewählten Sprache auf, den Code seiner Wertkarte einzugeben.

Anhand des vom Teilnehmer eingegebenen Codes der Wertkarte erkennt der Sprachserver die Kartenart. Dadurch lässt sich die Wertkarte von anderen Telekommunikationskarten, wie beispielsweise der Swiss Telecom Card, die für andere Funktionen vorgesehen ist, unterscheiden. Dieser Vorgang kennzeichnet der Block 43 im Flussdiagramm der Fig. 3.

Mit der Wertkarte sind zwei Funktionen vorgesehen. Einerseits das erfindungsgemässe Auf- oder Nachladen eines Geldbetragswertes auf einer Datenträgerkarte und andererseits das Benutzen der Wertkarte zum gewöhnlichen Telefonieren. Das Flussdiagramm in der Fig. 4 zeigt Verfahrensschritte, die zum Auf- oder Nachladen der Datenträgerkarte ausgeführt werden. Nach dem Eingeben der Dienstnummer wird der Teilnehmer gemäss dem Block 44 im Flussdiagramm der Fig. 4 aufgefordert, einzugeben, ob er telefonieren möchte oder ob er eine Datenträgerkarte aufladen möchte. Im in der Fig. 4 gezeigten Flussdiagramm wählt der Teilnehmer das Auf- oder Nachladen der Datenträgerkarte, wie dies durch den Block 45 dargestellt wird. Der Teilnehmer wird nun aufgefordert, den Identifikationscode bzw. die Natel-D-Nummer der Datenträgerkarte einzugeben, die er mit einem Geldbetragswert aufladen möchte. Hat der Teilnehmer wie im vorbeschriebenen Beispiel die Dienstnummer mit einem Mobilfunktelefon angewählt, so kann der Identifikationscode für die Datenträgerkarte, die im Mobilfunktelefon steckt, auf einem Display des Mobilfunktelefones direkt angezeigt werden (Block 47). Falls diese Datenträgerkarte aufgeladen werden soll, braucht der Teilnehmer den angezeigten Identifikationscode lediglich noch zu bestätigen. Andernfalls wird er durch den Sprachserver aufgefordert, den richtigen Identifikationscode einzugeben. Dieser Vorgang ist in den Blöcken 48, 49 und 50 in der Fig. 4 dargestellt. Ist der richtige Identifikationscode eingegeben, so wickelt sich das Verfahren zum Auf- oder Nachladen der jetzt bestimmten Datenträgerkarte wie folgt weiter ab. Gemäss dem Block 51 in der Fig. 4 erfolgt nun eine Abfrage der Datenbank 17 bzw. die Vornahme einer Bewertung. Dazu ist das sprachausgebende System 21 ebenfalls mit der Bewertungsplattform 16, das die Datenbank 17 enthält, verbunden. In einem Meldungsblock 31 ist der Bewertungsplattform 16 der vom Teilnehmer am Mobilfunktelefon 6 eingegebene Code 15 und der Identifikationscode 29 der Datenträgerkarte, die mit dem Geldbetragswert der Wertkarte nach- oder aufgeladen werden soll, mitgeteilt worden. Die Bewertungsplattform sucht nun in der Datenbank 17 den dem eingegebenen Code 15 entsprechenden Code, der dort, wie bereits erwähnt, anlässlich der Herstellung der Wertkarte abgespeichert worden ist. Wird der Code nicht gefunden, wird der Teilnehmer über den Sprachserver gemäss der Schleife, gebildet aus den Blöcken 53, 52, 51 in der Fig. 4 aufgefordert, den Code 15 richtig einzugeben. Ist dies geschehen und wird der richtige Code 15 ebenfalls in der Datenbank 17 gefunden, so ist für den Teilnehmer der Vorgang beendet. Die Bewertungsplattform überträgt nun einen Meldungsblock 32, der den Identifikationscode 29 der Datenträgerkarte enthält, die auf- oder nachgeladen werden soll, sowie den Geldbetragswert bzw. die Anzahl Taximpulse, um die die bestimmte Datenträgerkarte auf- oder nachgeladen werden sollen, an ein Abrechnungsmodul 24. Der Geldwertbetrag 28 bzw. die Anzahl Taximpulse, um die nun die durch den Identifikationscode 29 bestimmte Datenträgerkarte aufgeladen werden soll, ist dabei der Datenbank entnommen worden. Dieser Betrag ist dort dem Identifikationscode zugeordnet gewesen. Nachdem der Meldungsblock 32 erstellt worden ist, wird der entsprechende Code 15 in der Datenbank 17 als gebraucht markiert oder gelöscht.

Anhand der mit dem Meldungsblock 32 erhaltenen Informationen initialisiert das Abrechnungsmodul 24 das Erstellen einer Kurzmeldung 20 über die Betriebszentrale für besondere Dienste 19 in der Kurzmeldungservicezentrale 18. Die Kurzmeldung 20 ist dort in einer Datenbank abgelegt. Das nächste Mal, wenn die mit dem Identifikationscode bestimmte Datenträgerkarte 9 in einem Mobilfunktelefon 6 aktiv wird, d.h. wenn das Mobilfunktelefon eingeschaltet wird, wird die Kurzmeldung 20 abgesetzt und die Datenträgerkarte über das Mobilfunknetz 10 mit dem entsprechenden Geldbetragswert bzw. mit einer bestimmten Anzahl Taximpulsen auf- oder nachgeladen. Damit ist der Vorgang beendet.

Wie dies mit dem Bezugszeichen 8 dargestellt ist, kann der Auf- oder Nachladevorgang ebenfalls ab jedem gewöhnlichen Telefonapparat, der drahtgebunden mit einem Telefonnetz, hier beispielsweise mit dem ISDN-Netz 9 verbunden ist, vollzogen werden. In diesem Fall muss der Teilnehmer den Identifikationscode bzw. die Natel-D-Nummer der Datenträgerkarte, die auf- oder nachgeladen werden soll, manuell eingeben. Er wird dabei vom sprachausgebenden System 21 mit einer gesprochenen Meldung wie vorgängig beschrieben, dazu aufgefordert. Die gestrichelt gezeichnete Datenträgerkarte 7 beim Telefonapparat 8 deutet an, dass es in Zukunft auch möglich sein könnte, dass jeder drahtgebundene Telefonapparat 8 nicht mehr anhand seiner Telefonnummer identifiziert werden kann, sondern anhand der Datenträgerkarte, die zum Telefonieren in diesen Telefonapparat eingesteckt werden muss. Die Abrechnung der Telefongebühren würden dann nicht mehr für einen bestimmten Telefonapparat, sondern, wie dies im Mobilfunknetz gemäss dem GSM-Standard üblich ist, pro Datenträgerkarte insbesondere pro SIM-Karte erfolgen. Obschon eine solche Ausführungsform zur Zeit nicht vorgesehen ist, soll sie die vorliegende Erfindung ebenfalls erfassen.

Anstelle der Eingabe der Daten mittels der Dienstnummer kann eine Kurzmeldung nach dem GSM-Standard verwendet werden.

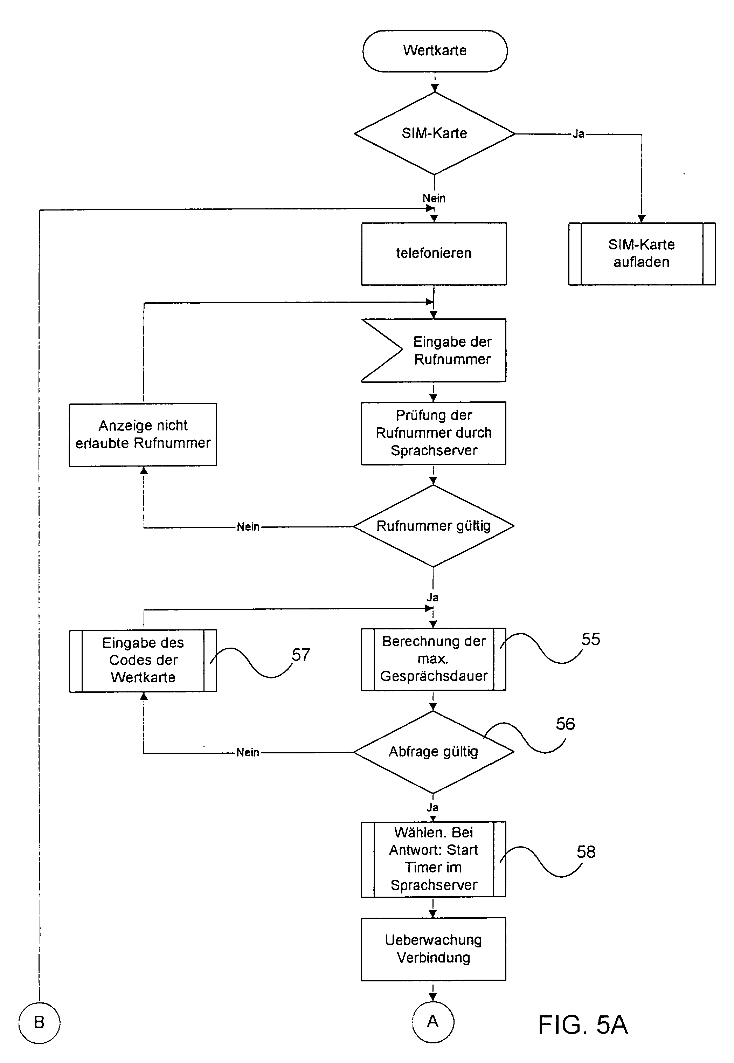

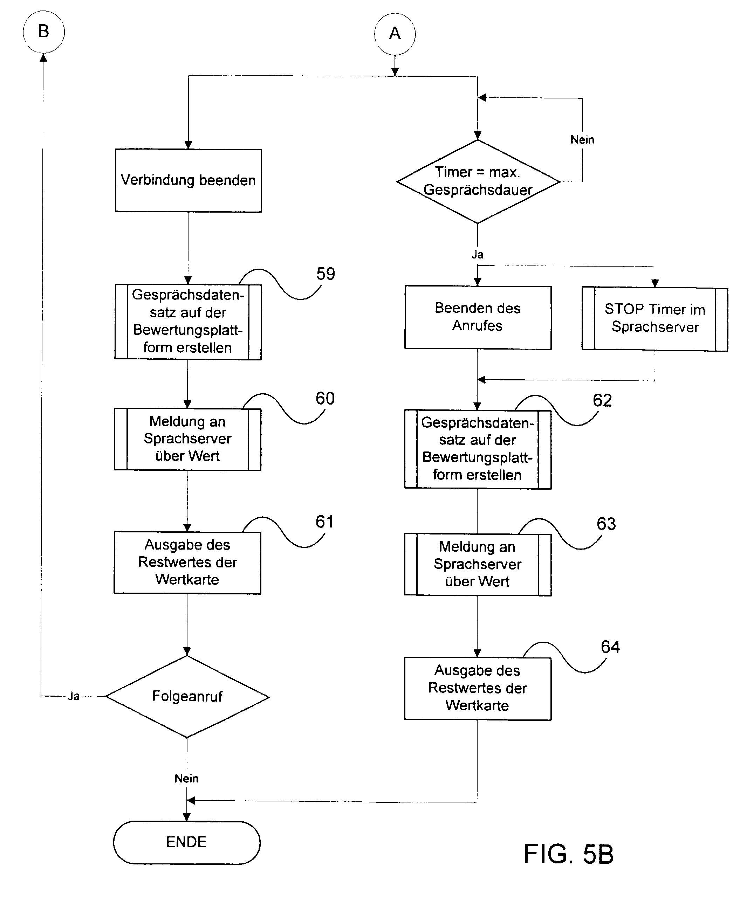

Wie bereits gesagt, kann die Wertkarte 13 auch zum gewöhnlichen Telefonieren benutzt werden. Die einzelnen Verfahrensschritte dazu sind im Flussdiagramm der Fig. 5 dargestellt. Da das eigentliche Telefonieren mit der Wertkarte nicht zur Erfindung gehört und das Flussdiagramm der Fig. 5 selbsterklärend ist, wird darauf verzichtet, den Telefoniervorgang in einem ausführlichen Stil zu erläutern. Es sei einzig darauf hingewiesen, dass, nachdem die Option Telefonieren gewählt worden ist, und dass, nachdem die Rufnummer des anzurufenden Teilnehmers ins Telekommunikationsgerät eingetippt worden ist, anhand des Standortes des anrufenden Teilnehmers und dem Geldbetragswert auf der Datenbank 17 die maximale Gesprächsdauer gemäss dem Block 55 berechnet wird. Falls eine Berechnung nicht erfolgen kann, weil in der Datenbank 17 der Bewertungsplattform 16 der Code 15 der Wertkarte nicht gefunden werden kann, wird die Eingabe des Codes in der Schleife der Blöcke 56, 57 weitere Male abgefragt. Wenn die Abfrage gültig ist, erfolgt der Verbindungsaufbau zum anzurufenden Teilnehmer. Nach erfolgreich hergestellter Verbindung wird im Sprachserver ein Timer gestartet und die vorher berechnete maximale Gesprächsdauer überwacht. Wenn die Verbindung beendet ist, wird in der Bewertungsplattform 16 eine Abrechnung erstellt, wieviel das Gespräch gekostet hat. Die Gesprächskosten oder die den Gesprächskosten entsprechende Anzahl Taximpulse werden in der Datenbank 17 der Bewertungsplattform 16 als Gesprächsbetragswert abgespeichert. Beim Aufladen oder Nachladen der Datenträgerkarte gemäss dem Flussdiagramm der Fig. 4 wird, falls Telefongespräche erfolgt sind, nun nicht der auf der Datenträgerkarte aufgedruckte nominale Geldbetragswert nach- oder aufgeladen, sondern der nominale Geldbetragswert abzüglich der Summe aller Gesprächsbetragswerte. Falls die Taximpulse gezählt werden, kann der Differenzbetragswert ebenfalls einer Anzahl Taximpulse entsprechen. Dieses Vorgehen erfolgt gemäss den Blöcken 59 und 60 gemäss dem Flussdiagramm in der Fig. 5. Nach dem Ende eines jeden Gespräches wird dem anrufenden Teilnehmer der verbleibende Geldbetragswert der Wertkarte bekanntgegeben.

Wenn die maximale errechnete Gesprächsdauer erreicht wird, wird der Anruf zum angerufenen Teilnehmer automatisch beendet. Gemäss den Blöcken 62 und 63 wird der Gesprächsbetragswert analog zu den beschriebenen Vorgängen in den Blöcken 59 und 60 berechnet und in der Datenbank 17 der Bewertungsplattform 16 abgelegt. Die Differenz zwischen dem nominalen Geldbetragswert der Wertkarte und der Summe aller Gesprächsbetragswerte ist jetzt null. Entsprechend wird gemäss dem Block 64 dem anrufenden Teilnehmer mitgeteilt, dass der Geldbetragswert der Wertkarte aufgebraucht ist.

Will ein Teilnehmer telefonieren, nachdem der Geldbetragswert seiner Wertkarte auf die Datenträgerkarte übertragen worden ist oder wird ein zweites Mal versucht, mit der gleichen Wertkarte die Datenträgerkarte nach- oder aufzuladen, so sorgt ein in den Flussdiagrammen nicht gezeichnetes Abwurfmodul dafür, dass dem Teilnehmer des Kommunikationsgerätes mitgeteilt wird, dass die Wertkarte ungültig ist. Er wird einige Male aufgefordert, einen richtigen Code einzugeben. Da ihm dies nicht gelingt, wird das Programm beendet.

## Patentansprüche

1. Verfahren zum Aufladen oder Nachladen einer Datenträgerkarte (7) mit einem Geldbetragswert (28), insbesondere einer SIM-Karte (7) für ein Kommunikationsgerät (6, 8) welches einem Kommunikationsnetz (9, 10) zugeordnet ist, welche Datenträgerkarte (7) mit einem Speichermittel (11) ausgerüstet ist, in welchem Speichermittel (11) der Geldbetragswert (28) gespeichert ist, gekennzeichnet durch die folgenden Schritte:
- für einen bestimmten Geldbetrag (12) wird eine vorauszahlbare Wertkarte (13) käuflich erworben,
- bei der Wertkarte (13) wird vom Besitzer der Karte ein abgedecktes Codefeld (14) freigelegt, wodurch ein Code (15) sichtbar wird,
- mit einem Kommunikationsgerät wird eine Dienstnummer angerufen, wodurch der Anrufer mit einer Datenbank (17) verbunden wird, in welcher sämtliche an Wertkarten vergebenen Code (15) und der jeweils dem Code zugeordnete Geldbetrag (12) gespeichert sind,
- der Anrufer wird aufgefordert, den Code (15) am anrufenden Kommunikationsgerät (6, 8) einzugeben,
- der eingegebene Code (15) wird mit den in der Datenbank (17) gespeicherten Codes verglichen,
- wird der eingegebene Code (15) in der Datenbank (17) gefunden, wird in einer Kurzmeldungsservicezentrale (18, 19) eine Kurzmeldung (20) mit dem auf- oder nachzuladenden Geldbetragswert (28) vorbereitet und zwischengespeichert,
- der Geldbetragswert (28) und der Code (15) in der Datenbank (17) werden als gebraucht markiert oder gelöscht, und
- das nächste Mal, wenn die Datenträgerkarte (7) in irgend einem der Kommunikationsgeräte (6, 8) steckt und eine Verbindung mit dem Kommunikationsnetz (9, 10) aufgebaut wird, wird die auf- oder nachzuladende Datenträgerkarte (7) mit dem zwischengespeicherten Geldbetragswert (28) mittels der vorbereiteten Kurzmeldung (20) auf- oder nachgeladen.

2. Verfahren nach Anspruch 1, dadurch gekennzeichnet, dass das Kommunikationsgerät (6, 8) nach dem Eingeben der Dienstnummer mit einem Sprache ausgebenden System (21) verbunden wird, und dass die weiteren Verfahrensschritte sprachgesteuert durchgeführt werden.

3. Verfahren nach Anspruch 1, dadurch gekennzeichnet, dass die Wertkarte (13) auch zum Telefonieren verwendet werden kann, wobei aus der Gesprächsdauer mit einem angerufenen Teilnehmer ein Gesprächsbetrag berechnet wird, welcher Gesprächsbetrag nach dem Gesprächsende in der Datenbank (17) festgehalten oder vom Geldbetragswert (12) subtrahiert wird, und dass zum Auf- oder Nachladen der Datenträgerkarte (7) nur noch die Differenz zwischen dem Geldbetragswert (12) und der Summe aller Gesprächsbeträge verwendet wird.

4. Verfahren nach Anspruch 1, dadurch gekennzeichnet, dass das Eingeben der Dienstnummer ab einem beliebigen drahtgebundenen Telefonapparat (8) oder ab einem beliebigen drahtlosen Kommunikationsgerät (6), das nach dem GSM-Standard arbeitet, erfolgen kann.

5. Verfahren zum Aufladen oder Nachladen einer Datenträgerkarte (7) mit einem Geldbetragswert (28), insbesondere einer SIM-Karte (7) für ein Kommunikationsgerät (6, 8) welches einem Kommunikationsnetz (9, 10) zugeordnet ist, welche Datenträgerkarte (7) mit einem Speichermittel (11) ausgerüstet ist, in welchem Speichermittel (11) der Geldbetragswert (28) gespeichert ist, gekennzeichnet durch die folgenden Schritte:
- für einen bestimmten Geldbetrag (12) wird eine vorauszahlbare Wertkarte (13) käuflich erworben,
- bei der Wertkarte (13) wird vom Besitzer der Karte ein abgedecktes Codefeld (14) freigelegt, wodurch ein Code (15) sichtbar wird,
- eine Kurzmeldung nach GSM-Standard wird dann verwendet, um den Anrufer mit einer Datenbank (17) zu verbinden, in welcher sämtliche an Wertkarten vergebenen Code (15) und der jeweils dem Code zugeordnete Geldbetrag (12) gespeichert sind,
- der Anrufer wird aufgefordert, den Code (15) am anrufenden Kommunikationsgerät (6, 8) einzugeben,
- der eingegebene Code (15) wird mit den in der Datenbank (17) gespeicherten Codes verglichen,
- wird der eingegebene Code (15) in der Datenbank (17) gefunden, wird in einer Kurzmeldungsservicezentrale (18, 19) eine Kurzmeldung (20) mit dem auf- oder nachzuladenden Geldbetragswert (28) vorbereitet und zwischengespeichert,
- der Geldbetragswert (28) und der Code (15) in der Datenbank (17) werden als gebraucht markiert oder gelöscht, und
- das nächste Mal, wenn die Datenträgerkarte (7) in irgend einem der Kommunikationsgeräte (6, 8) steckt und eine Verbindung mit dem Kommunikationsnetz (9, 10) aufgebaut wird, wird die auf- oder nachzuladende Datenträgerkarte (7) mit dem zwischengespeicherten Geldbetragswert (28) mittels der vorbereiteten Kurzmeldung (20) auf- oder nachgeladen.

6. Verfahren nach Anspruch 5, dadurch gekennzeichnet, dass das Kommunikationsgerät (6, 8) nach Verwendung der Kurzmeldung mit einem Sprache ausgebenden System (21) verbunden wird, und dass die weiteren Verfahrensschritte sprachgesteuert durchgeführt werden.

7. Verfahren nach Anspruch 5, dadurch gekennzeichnet, dass die Wertkarte (13) auch zum Telefonieren verwendet werden kann, wobei aus der Gesprächsdauer mit einem angerufenen Teilnehmer ein Gesprächsbetrag berechnet wird, welcher Gesprächsbetrag nach dem Gesprächsende in der Datenbank (17) festgehalten oder vom Geldbetragswert (12) subtrahiert wird, und dass zum Auf- oder Nachladen der Datenträgerkarte (7) nur noch die Differenz zwischen dem Geldbetragswert (12) und der Summe aller Gesprächsbeträge verwendet wird.

8. Verfahren nach Anspruch 5, dadurch gekennzeichnet, dass das Eingeben der Dienstnummer ab einem beliebigen drahtgebundenen Telefonapparat (8) oder ab einem beliebigen drahtlosen Kommunikationsgerät (6), das nach dem GSM-Standard arbeitet, erfolgen kann.

9. Anlage zum Durchführen eines Verfahrens gemäss einem der Ansprüche 1 bis 8, gekennzeichnet durch:
- eine Datenbank (17), in welcher eine Liste der an Wertkarten vergebenen Code und des jeweils dem Code zugeordneten Geldbetrages gespeichert ist,
- eine Bewertungsplattform(16), die in der benannten Datenbank (17) suchen kann, ob ein eingegebener Code gespeichert ist, und, in diesem Fall, einen Meldungsblock (32) übertragen und den Code (15) in der Datenbank (17) als gebraucht markieren oder löschen kann.

10. Anlage nach Anspruch 9, dadurch gekennzeichnet, dass sie einen Sprachserver (21) umfasst, der mit der entsprechenden Dienstnummer ab jedem beliebigen Telefonapparat (8) oder Kommunikationsgerät (6) über ein drahtgebundenes Kommunikationsnetz (9) oder über ein Mobilfunknetz (10) aufrufbar ist.

11. Anlage nach Anspruch 9, dadurch gekennzeichnet, dass ein Abrechnungsmodul (24) vorhanden ist, welches mit der Datenbank (17) und mit der Kurzmeldungsservicezentrale (18, 19) eines Mobilfunknetzes verbunden ist.

## Claims

1. Method for charging or recharging a data medium card (7), especially a SIM card (7) for a communications apparatus (6, 8) associated with a communications network (9, 10), with a monetary amount value (28), which data medium card (7) is provided with a storage means (11) in which the monetary amount value (28) is stored, characterised by the following steps:
- a pre-payable value card (13) is purchased for a particular monetary amount (12);
- a concealed code area (14) on the value card (13) is exposed by the owner of the card, whereby a code (15) becomes visible;
- an access number is called with a communications apparatus, whereby the caller is connected to a data base (17) in which all codes (15) assigned to value cards and the monetary amount (12) associated with each code are stored;
- the caller is asked to enter the code (15) in the calling communications apparatus (6, 8);
- the entered code (15) is compared with the codes stored in the data base (17);
- if the entered code (15) is found in the data base (17), a short message (20), with the monetary amount value (28) to be charged or recharged, is prepared and temporarily stored in a short message service centre (18, 19);
- the monetary amount value (28) and the code (15) in the data base (17) are marked as used or are deleted, and
- the next time the data medium card (7) is inserted in any of the communications apparatuses (6, 8) and a connection is established with the communications network (9, 10), the data medium card (7) to be charged or recharged with the temporarily stored monetary amount value (28) is charged or recharged by means of the prepared short message (20).

2. Method according to claim 1, characterised in that, after entering the access number, the communications apparatus (6, 8) is connected to a voice output system (21), and in that the further steps of the method are carried out voice-controlled.

3. Method according to claim 1, characterised in that the value card (13) can also be used for telephoning, a calling amount being calculated from the length of the call to a called subscriber, which calling amount is recorded in the data base (17) or is deducted from the monetary amount value (12) upon termination of the call, and in that only the difference between the monetary amount value (12) and the sum of all calling amounts is used for charging or recharging the data medium card (7).

4. Method according to claim 1, characterised in that the entering of the access number can take place from any desired fixed-network telephone set (8) or from any wireless communications apparatus (6) operating according to the GSM standard.

5. Method for charging or recharging a data medium card (7), especially a SIM card (7) for a communications apparatus (6, 8) associated with a communications network (9, 10), with a monetary amount value (28), which data medium card (7) is provided with a storage means (11) in which the monetary amount value (28) is stored, characterised by the following steps:
- a pre-payable value card (13) is purchased for a particular monetary amount (12);
- a concealed code area (14) on the value card (13) is exposed by the owner of the card, whereby a code (15) becomes visible;
- a short message according to the GSM standard is then used in order to connect the caller to a data base (17), in which all codes (15) assigned to value cards and the monetary amount (12) associated to each code are stored;
- the caller is asked to enter the code (15) in the calling communications apparatus (6, 8);
- the entered code (15) is compared with the codes stored in the data base (17);
- if the entered code (15) is found in the data base (17), a short message (20), with the monetary amount value (28) to be charged or recharged, is prepared and temporarily stored in a short message service centre (18, 19);
- the monetary amount value (28) and the code (15) in the data base (17) are marked as used or are deleted, and
- the next time the data medium card (7) is inserted in any of the communications apparatus (6, 8) and a connection is established with the communications network (9, 10), the data medium card (7) to be charged or recharged with the temporarily stored monetary amount value (28) is charged or recharged by means of the prepared short message (20).

6. Method according to claim 5, characterised in that, after using the short message the communications apparatus (6, 8) is connected to a voice output system (21), and in that the further steps of the method are carried out voice-controlled.

7. Method according to claim 5, characterised in that the value card (13) can also be used for telephoning, a calling amount being calculated from the length of the call to a called subscriber, which calling amount is recorded in the data base (17) or is deducted from the monetary amount value (12) upon termination of the call, and in that only the difference between the monetary amount value (12) and the sum of all calling amounts is used for charging or recharging the data medium card (7).

8. Method according to claim 5, characterised in that the entering of the access number can take place from any desired fixed-network telephone set (8) or from any wireless communications apparatus (6) operating according to the GSM standard.

9. Facility for carrying out a method according to one of the claims 1 to 8, characterised by:
- a data base (17) in which a list of the codes assigned to value cards and the monetary amount associated with each code is stored,
- a rating platform (16) which can search in the said data base (17) for whether an entered code is stored, and, in this case, can transmit a message block (32), and can mark the code (15) in the data base (17) as used or can delete it.

10. Installation according to claim 9, characterised in that it comprises a speech server (21) which can be called up with the respective access number from any desired telephone set (8) or communications apparatus (6) via a fixed communications network (9) or via a mobile radio network (10).

11. Installation according to claim 9, characterised in that there is a billing module (24) connected to the data base (17) and to the short message service centre (18, 19) of a mobile radio network.

## Revendications

1. Procédé de charge ou de recharge d'une carte à support de données (7) avec une somme d'argent (28), en particulier une carte SIM (7), destinée à un appareil de communications (6, 8) faisant partie d'un réseau de communications (9, 10), cette carte à support de données (7) étant équipée d'une mémoire (11) dans laquelle la somme d'argent (28) est enregistrée, caractérisé par les opérations suivantes :
- une carte prépayée (13) est achetée pour un montant (12) déterminé,
- le propriétaire de la carte prépayée (13) dégage une plage de code (14), ce qui permet de voir un code (15),
- au moyen d'un appareil de communications, on appelle un numéro de téléphone de service, ce qui met le demandeur en communication avec une banque de données (17) dans laquelle tous les codes (15) attribués à des cartes prépayées et le montant (12) correspondant au code sont enregistrés en mémoire,
- le demandeur est invité à taper le code (15) sur l'appareil de communications (6, 8) d'où vient l'appel,
- le code (15) communiqué est comparé aux codes qui sont en mémoire dans la banque de données (17),
- si le code (15) communiqué est trouvé dans la banque de données (17), une centrale de service pour messages courts (18, 19) prépare un bref message (20) comportant la somme d'argent (28) qui doit être chargée ou ajoutée, et l'enregistre dans une mémoire tampon,
- dans la banque de données (17), la somme d'argent (28) et le code (15) sont marqués comme étant utilisés, ou effacés, et
- la fois suivante où la carte à support de données (7) est en place dans l'un quelconque des appareils de communications (6, 8) et où une communication est établie avec le réseau de communications (9, 10), la carte à support de données (7) qu'il faut charger ou recharger est chargée ou rechargée, avec la somme d'argent (28) enregistrée dans la mémoire tampon, au moyen du bref message (20) qui a été préparé.

2. Procédé selon la première revendication, caractérisé en ce que l'appareil de communications (6, 8) est relié, après qu'on a tapé le numéro de service, à un système (21) fournissant de la parole, et en ce que les autres étapes du procédé sont à commande vocale.

3. Procédé selon la première revendication, caractérisé en ce que la carte prépayée (13) peut être utilisée aussi pour téléphoner, la durée de la communication avec un abonné que l'on a appelé servant à calculer le montant de la communication, montant qui, après la fin de la communication, est enregistré dans la banque de données (17) ou soustrait de la somme d'argent (12), et en ce que, pour charger ou recharger la carte à support de données (7), on n'utilise plus que la différence entre la somme d'argent (12) et la somme de tous les montants des communications.

4. Procédé selon la première revendication, caractérisé en ce que le numéro de service peut être composé à partir d'un appareil téléphonique quelconque à fil (8) ou d'un appareil de communications (6, 8) quelconque sans fil, fonctionnant selon la norme GSM.

5. Procédé de charge ou de recharge d'une carte à support de données (7) avec une somme d'argent (28), en particulier une carte SIM (7), destinée à un appareil de communications (6, 8) appartenant à un réseau de communications (9, 10), cette carte à support de données (7) étant équipée d'une mémoire (11) dans laquelle est enregistrée la somme d'argent (28), caractérisé par les opérations suivantes :
- pour un montant (12) déterminé, l'utilisateur achète une carte prépayée (13),
- sur la carte prépayée (13), son propriétaire dégage une plage de code (14) qui était couverte, ce qui rend visible un code (15),
- un message court conforme à la norme GSM est ensuite utilisé pour relier la personne qui appelle à une banque de données (17) dans laquelle tous les codes (15) attribués à des cartes prépayées et la somme d'argent (12) correspondant à chaque code sont enregistrés en mémoire,
- le demandeur est invité à taper le code (15) sur l'appareil de communications (6, 8) d'où vient l'appel,
- le code tapé (15) est comparé aux codes stockés dans la banque de données (17),
- si le code (15) tapé est trouvé dans la banque de données (17), une centrale de service pour messages courts (18, 19) prépare un bref message (20) comportant la somme d'argent (28) qui doit être chargée ou ajoutée, et l'enregistre dans une mémoire tampon,
- dans la banque de données (17), la somme d'argent (28) et le code (15) sont marqués comme étant utilisés, ou effacés, et
- la fois suivante où la carte à support de données (7) est en place dans l'un quelconque des appareils de communications (6, 8) et où une communication est établie avec le réseau de communications (9, 10), la carte à support de données (7) qu'il faut charger ou recharger est chargée ou rechargée, avec la somme d'argent (28) enregistrée dans la mémoire tampon, au moyen du bref message (20) qui a été préparé.

6. Procédé selon la revendication 5, caractérisé en ce que, après l'utilisation du bref message, l'appareil de communications (6, 8) est relié à un système (21) fournissant de la parole, et en ce que les autres étapes du procédé sont à commande vocale.

7. Procédé selon la revendication 5, caractérisé en ce que la carte prépayée (13) peut être utilisée aussi pour téléphoner, la durée de la communication avec un abonné que l'on a appelé servant à calculer le montant de la communication, montant qui, après la fin de la communication, est enregistré dans la banque de données (17) ou soustrait de la somme d'argent (12), et en ce que, pour charger ou recharger la carte à support de données (7), on n'utilise plus que la différence entre la somme d'argent (12) et la somme de tous les montants des communications.

8. Procédé selon la revendication 5, caractérisé en ce que le numéro de service peut être composé à partir d'un appareil téléphonique quelconque à fil (8) ou d'un appareil de communications (6) quelconque sans fil, fonctionnant selon la norme GSM.

9. Installation servant à appliquer un procédé selon l'une des revendications 1 à 8, caractérisée par :
- une banque de données (17) dans laquelle une liste des codes attribués à des cartes prépayées et le montant correspondant à chacun des codes sont enregistrés en mémoire,
- une plate-forme d'interprétation (16) qui peut chercher dans la banque de données (17) précitée si un code qui a été tapé existe dans la mémoire et, dans ce cas, peut transmettre un message (32) et, dans la banque de données (17), marquer le code (15) comme étant utilisé ou l'effacer.

10. Installation selon la revendication 9, caractérisée en ce qu'elle comprend un serveur vocal (21) qui peut être appelé, avec le numéro de service correspondant, à partir de n'importe quel appareil téléphonique (8) ou appareil de communications (6), par l'intermédiaire d'un réseau de communications à fil (9) ou d'un réseau radio à postes mobiles (10).

11. Installation selon la revendication 9, caractérisée en ce qu'elle comprend un module (24) de mise à jour des comptes qui est relié à la banque de données (17) et à la centrale de service pour messages courts (18, 19) d'un réseau radio à postes mobiles.
